# EUROPEAN PATENT APPLICATION

(11) **EP 4 468 578 A1**
(43) Date of publication of application: **27.11.2024**
(21) Application number: 24174702.1
(22) Date of filing: 08.05.2024
(51) Int. Cl.: H02K 17/16

(54) **INDUCTION MOTOR**

(30) Priority: 15.05.2023 JP 2023080427
(71) Applicant: MAZDA MOTOR CORPORATION, Hiroshima 730-8670 (JP)
(72) Inventor: Yonemori, Kei, Aki-gun, Hiroshima, 730-8670 (JP)
(74) Representative: von Tietzen und Hennig, Nikolaus

(57) **Abstract**

To provide a motor capable of preventing a loss due to an excessive leakage current, by increasing the number of poles when comparing to the related art.

A motor 2 includes a cylindrical stator 8 and a cylindrical rotor 9 rotatably provided in the stator 8 coaxially with the center axis of the stator 8 and is used to drive front wheels FW of a vehicle 1 with rotation of the rotor 9. The rotor 9 includes a cage unit 13 including a single short-circuit ring 18 formed in a ring shape and a plurality of secondary conductors 17, and one end portions 17a and the other end portions 17b of the secondary conductors 17 are respectively connected to positions separated in the circumferential direction in the single short-circuit ring 18.

## Description

### [Technical Field]

The present invention relates to a motor and, more particularly, to a motor used to drive driving wheels of a vehicle.

### [Background Art]

There has been known that an induction motor is used as a vehicle driving motor. For example, Patent Literature 1 discloses an induction motor including a stator and a squirrel-cage rotor.

The squirrel-cage rotor of the induction motor includes a plurality of secondary conductors and a pair of short-circuit rings respectively connected to end portions of the plurality of secondary conductors. The secondary conductors are disposed side by side in the circumferential direction to be substantially equal distances apart from one another. When a rotating magnetic field formed in the stator crosses the secondary conductors, a secondary current due to electromagnetic induction flows to the secondary conductors, whereby a magnetic field is formed. The induction motor is configured to generate a force for rotating the rotor, that is, motor torque with the magnetic field formed by the secondary current and the rotating magnetic field.

### [Citation List]

### [Patent Literature]

[Patent Literature 1] Japanese Patent Laid-Open No. 7-322413

### [Summary of Invention]

### [Problems to be Solved by the Invention]

Incidentally, not all of directions of the secondary current flowing in the secondary conductors are the same direction. The directions are different depending on magnetic poles of the rotating magnetic field crossing the secondary conductors. Therefore, there are parts where the secondary current flowing in one of the secondary conductors adjacent to each other in the circumferential direction and the secondary current flowing in the other of the secondary conductors flow in opposite directions. The number of the parts depends on the number of poles of the stator. For example, in the case of the induction motor described in Patent Literature 1, since the number of poles of the stator is four, the parts are four parts.

When the secondary conductors adjacent to each other in the circumferential direction are disposed close to each other, in the parts where the secondary current flows in the opposite directions each other, a phenomenon called leakage current in which the secondary current flowing in one secondary conductor flows to the other secondary conductor occurs. The leakage current is a factor of reducing motor torque because the leakage current is a loss for the motor.

The vehicle driving motor is requested to increase motor torque from the viewpoint of securely preventing shortage of a vehicle driving force, for example, at a vehicle travel start time. Therefore, it is conceivable to increase the motor torque by increasing the number of poles of the stator to be larger than the number of poles in the related art. However, if the number of poles of the stator is increased, the parts where the secondary current flows in the opposite directions each other explained above also increase. Therefore, it is likely that the loss due to the leakage current also increases.

The present invention has been devised in view of the points described above, and an object of the present invention is to provide a motor capable of preventing a loss due to a leakage current from increasing by increasing the number of poles to be larger than the number of poles in the related art.

### [Means for Solving the Problems]

In order to achieve the object described above, the present invention devised the following solution targeting a motor including: a cylindrical stator; and a cylindrical rotor rotatably provided in the stator coaxially with a center axis of the stator, the motor driving driving wheels of a vehicle with rotation of the rotor.

That is, a first invention is characterized in that the rotor includes a cage unit including a single short-circuit ring formed in a ring shape and a plurality of secondary conductors, and one end portions and other end portions of the secondary conductors are respectively connected to positions separated in a circumferential direction in the single short-circuit ring.

A second preferred aspect is characterized in that, in the first invention, the plurality of secondary conductors include a first secondary conductor and a second secondary conductor, and one end portion of the second secondary conductor is located between one end portion and another end portion in the circumferential direction in the first secondary conductor.

A third preferred aspect is characterized in that, in the first or second invention, the plurality of secondary conductors are formed in a U shape.

A fourth preferred aspect is characterized in that the U shape is formed by an one end side portion, an other side end portion extending in the axial direction and a connecting portion extending in the circumferential direction with its end portions being connected to the axial direction other side end portions of the one end side portion and the axial direction end portion of the other side end portion.

A fifth preferred aspect is characterized in that the rotor includes a rotor core with a plurality of housing recesses for housing the secondary conductors and being disposed side by side in the circumferential direction while being spaced apart with a predetermined distance from one another, wherein the depths of the plurality of housing recesses are set to three stages of large, middle, and small.

A sixth preferred aspect is characterized in that pitches in the circumferential direction between one end side portions and other end side portions of the secondary conductors are set the same, preferably the pitches are set the same as pitches among magnetic poles of a rotating magnetic field formed by first conductors of the stator.

A seventh aspect is characterized in that, in the first or second invention, a first insulating film section including an insulative film is provided on outer surfaces of the plurality of secondary conductors.

A eighth aspect is characterized in that, in the fourth invention, the first insulating film section is not provided in connecting portions to the single short-circuit ring in the plurality of secondary conductors.

A ninth aspect is characterized in that, in the first or second invention, a second insulating film section including an insulative film is provided on an outer surface of the single short-circuit ring.

An tenth aspect is characterized in that, in the first or second invention, a plurality of insertion holes are provided in the circumferential direction in the single short-circuit ring, and the one end portions and the other end portions of the secondary conductors are bonded to the single short-circuit ring in a state in which the one end portions and the other end portions are inserted into the plurality of insertion holes.

An eleventh aspect is characterized in that a cylindrical cover is wound on the outer circumference of the rotor core, in particular on the outer circumference of the plurality of secondary conductors, to prevent the secondary conductors from being deformed toward the outer circumference side.

An twelfth aspect is characterized in that the number of poles of the rotor and the number of poles of the stator coincide.

The invention is further directed to a vehicle including at least one driving wheel being driven by rotation of the rotor of a motor according to the first invention or its preferred aspects.

### [Advantageous Effects of Invention]

In the first invention, since the one end portions and the other end portions of the secondary conductors are respectively connected to the positions separated from one another in the circumferential direction in the single short-circuit ring, parts on the one end portion side and parts on the other end portion side of the secondary conductors are separated in the circumferential direction. This makes it possible to suppress a leakage current that occurs between the parts on the one end side portion and the parts on the other end side portion. Therefore, since it is possible to prevent a loss due to the leakage current from increasing even if the number of poles of the stator is increased, it is possible to avoid shortage of a vehicle driving force at a vehicle travel start time or the like.

In the second preferred aspect of the invention, the one portion and the other end portion of the first secondary conductor are respectively located on both the sides in the circumferential direction of the one end portion of the second secondary conductor. That is, since the part on the one end portion side and the part on the other end portion side of the first secondary conductor are sufficiently separated in the circumferential direction, it is possible to securely prevent a leakage current from occurring between both the parts.

In the third preferred aspect of the invention, since both the ends of the secondary conductors formed in the U shape only have to be connected to the single short-circuit ring when, for example, the cage unit is manufactured, it is possible to reduce manufacturing cost of the motor.

In the seventh preferred aspect of the invention, since the first insulating film section is provided on the outer surfaces of the secondary conductors, it is possible to more securely prevent a leakage current from occurring between the secondary conductors or between the parts on the one end portion side and the parts on the other end side portion in the secondary conductors.

In the eighth preferred aspect of the invention, since the first insulating film section is not provided in the connecting portions of the single short-circuit ring in the secondary conductors, the secondary conductors and the single short-circuit ring become conductible. Accordingly, the secondary conductors and the single short-circuit ring can form a closed circuit capable of feeding a secondary current. Therefore, it is possible to prevent, with the first insulating film section, the flow of the secondary current between the secondary conductors and the single short-circuit ring from being hindered.

In the ninth preferred aspect of the invention, since the second insulating film section is provided on the outer surface of the single short-circuit ring, it is possible to prevent rotor components other than the secondary conductors and the single short-circuit ring from conducting. This makes it possible to prevent a secondary current flowing in the secondary conductors from leaking to the rotor components via the single short-circuit ring to be a loss.

In the tenth preferred aspect of the invention, since the first end portions and the other end portions of the secondary conductors are bonded in the state in which the one end portions and the second end portions are inserted into the insertion holes of the single short-circuit ring, it is possible to firmly connect the secondary conductors and the single short-circuit ring.

### [Brief Description of Drawings]

FIG. 1 is a plan view illustrating a schematic configuration of a vehicle mounted with a motor according to an embodiment of the present invention.
FIG. 2 is a schematic sectional view illustrating a radial direction cross section of the motor.
FIG. 3 is a schematic perspective view illustrating a cage unit.
FIG. 4 is a schematic sectional view illustrating a connecting structure of secondary conductors and a short-circuit ring in the cage unit.
FIG. 5 is a schematic diagram illustrating magnetic poles of a stator and a rotor.
FIG. 6 is a schematic diagram illustrating a modification of the cage unit.
FIG. 7 is a schematic diagram illustrating a modification of the cage unit.

### [Mode for Carrying Out the Invention]

An embodiment of the present invention is explained in detail below with reference to the drawings. Note that the following explanation of a preferred embodiment is essentially only an exemplification.

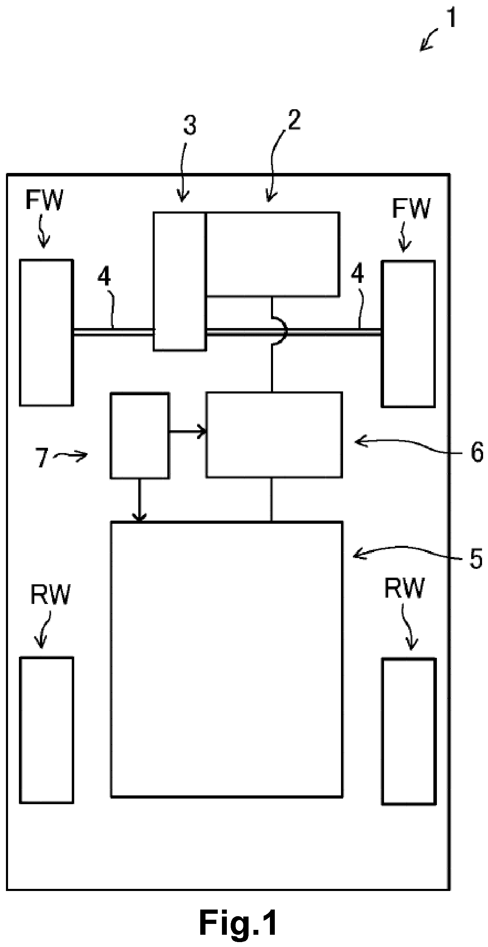

FIG. 1 illustrates a vehicle 1 mounted with a motor 2 according to the embodiment of the present invention. The vehicle 1 is a front-wheel drive electric automobile mounted with the motor 2 functioning as a driving source. The vehicle 1 includes a speed reducer 3, a pair of left and right drive shafts 4, a pair of left and right front wheels FW (driving wheels), and a pair of left and right rear wheels RW (driven wheels).

The motor 2 is an induction motor and is disposed in a not-illustrated motor room provided in a front part of the vehicle 1. The motor 2 is connected to the front wheels FW via the speed reducer 3 and the drive shafts 4. Accordingly, motor torque (a vehicle driving force) generated in the motor 2 is transmitted respectively to the left and right front wheels FW via the speed reducer 3 and the left and right drive shafts 4.

The vehicle 1 includes a battery 5, an inverter 6, and a control device 7.

The battery 5 is, for example, a lithium ion battery and is capable of charging and discharging a DC current. The battery 5 is electrically connected to the motor 2 via the inverter 6.

The inverter 6 is capable of converting a DC current and an AC current (for example, a three-phase current). The inverter 6 is capable of executing a mode for converting a DC current discharged from the battery 5 into an AC current and thereafter supplying the AC current to the motor 2 and a mode for converting an AC current (a regenerative current) output from the motor 2 into a DC current and thereafter charging the battery 5 with the DC current.

The control device 7 includes a processor and a memory not illustrated in FIG. 1 and is configured to control the motor 2, the battery 5, and the inverter 6. Note that the motor 2 is indirectly controlled via the inverter 6.

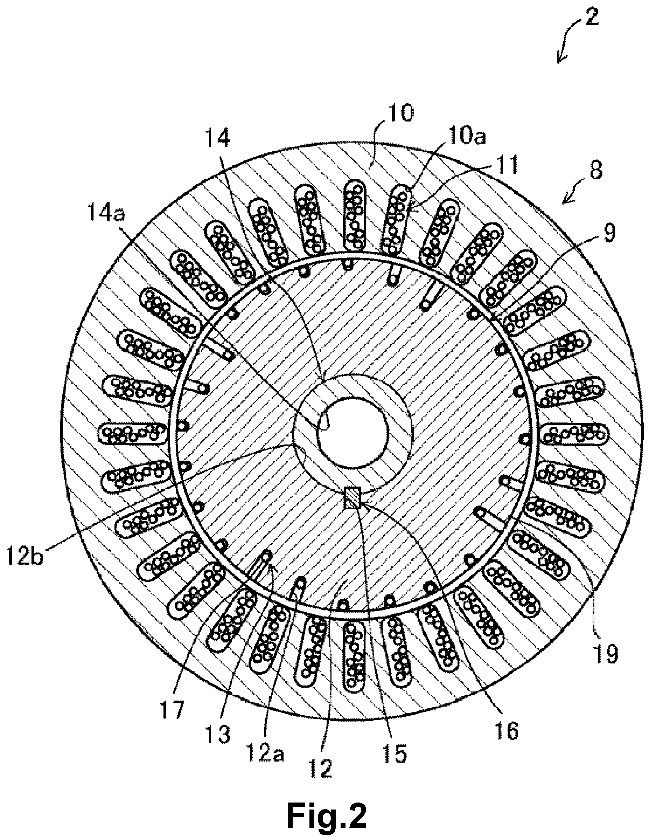

Next, detailed structure of the motor 2 is explained with reference to FIG. 2.

The motor 2 includes a substantially cylindrical stator 8 and a substantially cylindrical rotor 9 rotatably provided in the stator 8 coaxially with the center axis of the stator 8.

The stator 8 includes a stator core 10 and a plurality of primary conductors (primary coils) 11.

In the stator core 10, a plurality of electromagnetic steel plates formed in a substantially ring shape are stacked in the axial direction. The stator core 10 includes a plurality of slots 10a recessed from the inner circumferential surface of the stator core 10 toward the radial-direction outer side. The plurality of slots 10a are disposed side by side in the circumferential direction while being spaced apart a predetermined distance from one another. The plurality of primary conductors 11 are housed in the slots 10a. The plurality of primary conductors 11 are, for example, U-phase coils, V-phase coils, and W-phase coils. The coils are respectively housed in the slots 10a corresponding thereto.

AC currents phase-shifted by 120° for each phase are supplied to the U-phase coils, the V-phase coils, and the W-phase coils from the inverter 6. When an AC current is supplied from the inverter 6 to the primary conductors 11, a rotating magnetic field is formed in the primary conductors 11.

The rotor 9 includes a rotor core 12 and a cage unit 13.

In the rotor core 12, a plurality of electromagnetic steel plates formed in a disk shape are stacked in the axial direction. The rotor core 12 includes a plurality of housing recesses 12a recessed from the outer circumferential surface of the rotor core 12 toward the radial-direction inner side. The plurality of housing recesses 12a are disposed side by side in the circumferential direction while being spaced apart a predetermined distance from one another. As illustrated in FIG. 2, the depths of the plurality of housing recesses 12a are set to three stages of large, middle, and small.

A through-hole 12b piercing through the rotor core 12 is formed in the center portion of the rotor core 12. An output shaft 14 formed in a substantially cylindrical shape is inserted through the through-hole 12b. A cooling passage section 14a through which a cooling medium is supplied is provided on the inside of the output shaft 14.

The rotor core 12 (the rotor 9) and the output shaft 14 are connected to integrally rotate. In this embodiment, a key 16 is fit in a key groove 15 provided respectively on the inner circumferential surface of the rotor core 12 and the outer circumferential surface of the output shaft 14, whereby the rotor core 12 (the rotor 9) and the output shaft 14 are connected to be incapable of relatively rotating.

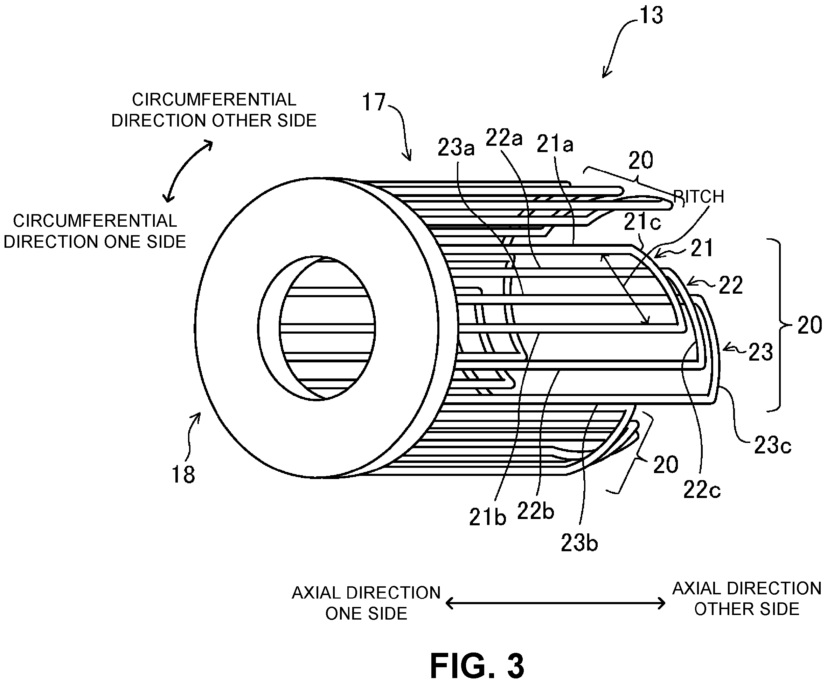

The cage unit 13 includes, as illustrated in FIG. 3, a plurality of secondary conductors 17 formed in a substantially U shape and a single short-circuit ring 18 formed in a ring shape. The secondary conductors 17 are housed in the housing recesses 12a of the rotor core 12 (see FIG. 2).

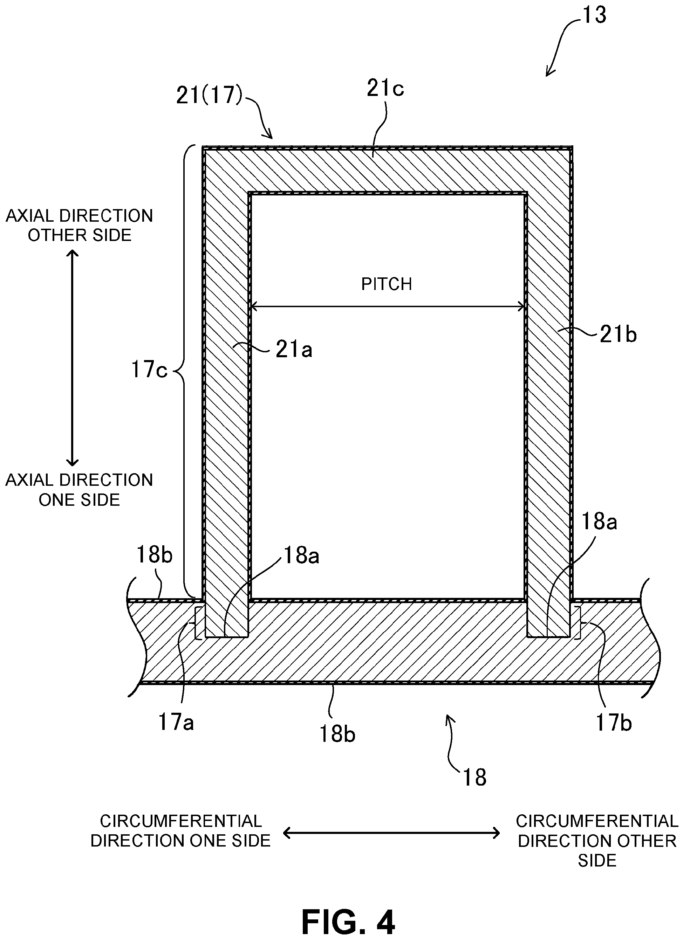

In the case of a general squirrel-cage conductor, the axial direction end portions of a plurality of secondary conductors formed in a substantially bar shape are respectively connected to different short-circuit rings. However, in the squirrel-cage conductor (the cage unit 13) in this embodiment, as illustrated in FIG. 3, the single short-circuit ring 18 is provided only on the axial direction one side of the plurality of secondary conductors 17 formed in the substantially U shape. One end portions 17a and other end portions 17b (see FIG. 4) of the secondary conductors 17 are respectively connected to positions separated in the circumferential direction on the single short-circuit ring 18. Note that, in FIG. 3, the rotor core 12 is omitted for convenience of explanation.

A cylindrical cover 19 for rotor scattering prevention is wound on the outer circumference of the rotor core 12 (see FIG. 2). This makes it possible to prevent the secondary conductors 17 from being deformed toward the outer circumference side by a centrifugal force generated when the rotor 9 rotates at high speed. Note that, in this embodiment, since the secondary conductors 17 are cantilever-supported from the axial direction one side with respect to the single short-circuit ring 18, parts on the axial direction other side in the secondary conductors 17 are easily deformed by the centrifugal force. In contrast, since the cover 19 is wound from the outer circumference side, it is possible to suppress the deformation of the parts on the axial direction other side.

In this embodiment, the plurality of secondary conductors 17 configure a plurality of sets of secondary conductor sets 20. The secondary conductor sets 20 are disposed side by side in the circumferential direction while being spaced apart a predetermined distance from one another. A first secondary conductor 21, a second secondary conductor 22, and a third secondary conductor 23 are provided in the secondary conductor sets 20.

The first secondary conductor 21 includes a first one end side portion 21a and a first other end side portion 21b extending in the substantially axial direction and provided to be spaced apart a distance in the circumferential direction from each other and a first connecting portion 21c extending in the substantially circumferential direction, end portions of the first connecting portion 21c being respectively connected to the axial direction other side end portion of the first one end side portion 21a and the axial direction end portion of the first other end side portion 21b.

The second secondary conductor 22 includes a second one end side portion 22a and a second other end side portion 22b extending in the substantially axial direction and provided to be spaced apart a distance in the circumferential direction from each other and a second connecting portion 22c extending in the substantially circumferential direction, end portions of the second connecting portion 22c being respectively connected to the axial direction other side end portion of the second one end side portion 22a and the axial direction other side end portion of the second other end side portion 22b.

The third secondary conductor 23 includes a third one end side portion 23a and a third other end side portion 23b extending in the substantially axial direction and provided to be spaced apart a distance in the circumferential direction from each other and a third connecting portion 23c extending in the substantially circumferential direction, end portions of the third connecting portion 23c being respectively connected to the axial direction other side end portion of the third one end side portion 23a and the axial direction other side end portion of the third other end side portion 23b.

The second one end side portion 22a and the third one end side portion 23a are located between the first one end side portion 21a and the first other end side portion 21b in the circumferential direction. The second other end side portion 22b is located between the first other end side portion 21b and the third other end side portion 23b in the circumferential direction. That is, the first secondary conductor 21, the second secondary conductor 22, and the third secondary conductor 23 are disposed to be offset from one another in the circumferential direction.

Pitches in the circumferential direction among the first secondary conductor 21, the second secondary conductor 22, and the third secondary conductor 23 (pitches in the circumferential direction between the one end side portions 21a to 23a and the other end side portions 21b to 23b) are set substantially the same. The pitches are set to size capable of suppressing a leakage current that occurs between the one end side portions 21a to 23a and the other end side portions 21b to 23b (for example, between the first one end side portion 21a and the first other end side portion 21b). Note that, in this embodiment, the pitches are set substantially the same as pitches among magnetic poles of a rotating magnetic field formed by the first conductors 11 of the stator 8.

Next, a connecting structure of the plurality of secondary conductors 17 and the single short-circuit ring 18 is explained with reference to FIG. 4. In FIG. 4, explanation for the plurality of secondary conductors 17 is made using only the first secondary conductor 21 for convenience of explanation. Note that the second secondary conductor 22 and the third secondary conductor 23 are the same as the first secondary conductor 21.

The first secondary conductor 21 is made of a nonmagnetic conductor (for example, aluminum or copper). A portion in the first one end side portion 21a on the axial direction opposite side to the first connecting portion 21c, that is, a portion on the axial direction one side in the first one end side portion 21a configures the one end portion 17a of the first secondary conductor 21. A portion in the first other end side portion 21b on the axial direction opposite side to the first connecting portion 21c, that is, a portion on the axial direction one side in the first other end side portion 21b configures the other end portion 17b of the first secondary conductor 21.

As illustrated in FIG. 4, a first insulating film section 17c, in which an insulative film is formed, is provided on the outer surfaces of a portion excluding the one end portion 17a in the first one end side portion 21a, a portion excluding the other end portion 17b in the first other end side portion 21b, and the first connecting portion 21c. On the other hand, an insulative film is not provided in the one end portion 17a and the other end portion 17b in the first secondary conductor 21.

The single short-circuit ring 18 is formed in a substantially ring shape as illustrated in FIG. 3 and is made of a nonmagnetic conductor (for example, aluminum or copper). In the outer circumferential portion of the short-circuit ring 18, as illustrated in FIG. 4, a plurality of insertion holes 18a are provided. The insertion holes 18a are provided in the circumferential direction while being spaced apart a predetermined distance from one another. As illustrated in FIG. 4, a second insulating film section 18b, in which an insulative film is formed, is provided on the outer surface of the short-circuit ring 18.

In this embodiment, the insulative film is formed by, for example, applying insulative resin (polyimide, polyester, polyurethane, or the like) to the outer surfaces of the first secondary conductor 21 (the secondary conductor 17) and the single short-circuit ring 18 and thereafter baking the insulative resin.

The one end portion 17a and the other end portion 17b of the first secondary conductor 21 are inserted into the plurality of insertion holes 18a. The first secondary conductor 21 and the single short-circuit ring 18 are bonded (connected) by, for example, welding in a state in which the one end portion 17a and the other end portion 17b are inserted into the plurality of insertion holes 18a. The first end portion 17a and the other end portion 17b of the first secondary conductor 21 are inserted into the insertion holes 18a, whereby the one end portion 17a and the other end portion 17b of the first secondary conductor 21 are respectively connected to positions separated in the circumferential direction in the single short-circuit ring 18. This makes it possible to separate the first one end side portion 21a and the first other end side portion 21b in the circumferential direction in the first secondary conductor 21. Therefore, a leakage current that occurs between the first one end side portion 21a and the first other end side portion 21b is suppressed.

In a state in which the first secondary conductor 21 and the single short-circuit ring 18 are connected, the one end portion 17a and the other end portion 17b of the first secondary conductor 21 enter the insertion holes 18a. Here, since an insulative film is not formed on the one end portion 17a and the other end portion 17b of the first secondary conductor 21, the first secondary conductor 21 and the single short-circuit ring 18 are conductible. Accordingly, the first secondary conductor 21 and the single short-circuit ring 18 form a closed circuit capable of feeding a secondary current (an induction current).

Since the second insulating film section 18b is provided on the outer surface of the single short-circuit ring 18, a secondary current flowing in the first secondary conductor 21 is prevented from leaking to the rotor core 12 and the like via the short-circuit ring 18 to be a loss.

A portion other than the one end portion 17a and the other end portion 17b in the first secondary conductor 21 is located on the outside of the insertion holes 18a. In other words, only a portion including the first insulating film section 17c in the first secondary conductor 21 is exposed to the outside. A leakage current between the first one end side portion 21a and the first other end side portion 21b of the first secondary conductor 21 or between the secondary conductors 17 adjacent to each other in the circumferential direction (for example, between the first secondary conductor 21 and the second secondary conductor 22) is suppressed by the first insulating film section 17c.

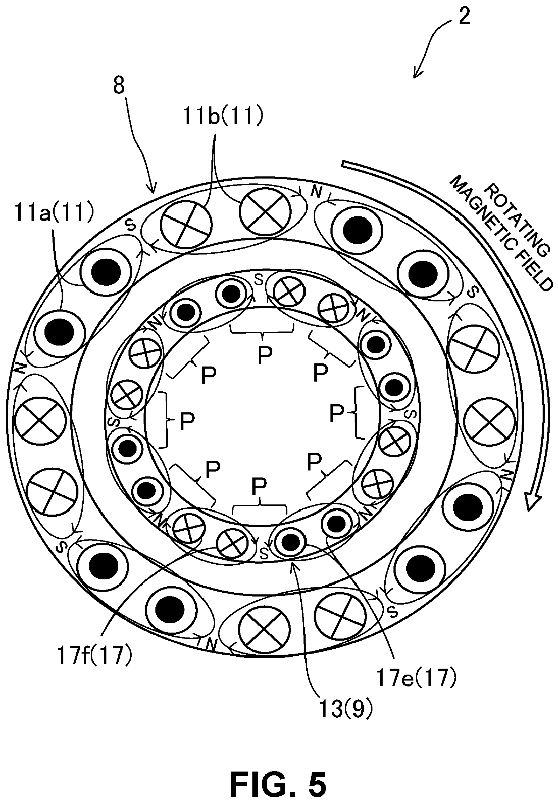

Next, an operation of the motor 2 is explained with reference to FIG. 5. In FIG. 5, an example in which the number of poles of the stator 8 is eight is illustrated. In this embodiment, a secondary current (an induction current) flowing in the secondary conductors 17 is generated by being electromagnetically induced by a rotating magnetic field of the stator 8. Therefore, the number of poles of the rotor 9 (the cage unit 13) and the number of poles of the stator 8, that is, the number of poles of the rotating magnetic field of the stator 8 coincide.

In FIG. 5, a ring on the outer circumference side indicates the stator 8 in which the primary conductors 11 are disposed side by side in the circumferential direction. The primary conductors 11 are illustrated by changing signs to 11a and 11b according to directions in which an electric current flows. The primary conductors 11a indicate that a primary current (an AC current supplied from the inverter 6) flows from the paper surface depth side toward the paper surface near side. On the other hand, the primary conductors 11b indicate that the primary current flows from the paper surface near side toward the paper surface depth side.

In FIG. 5, a ring on the inner circumference side indicates the cage unit 13 of the rotor 9. In the cage unit 13, the plurality of secondary conductors 17 are disposed side by side in the circumferential direction. The secondary conductors 17 are illustrated by changing signs to 17e and 17f according to directions in which an electric current flows. The secondary conductors 17e indicate that a secondary current flows from the paper surface depth side toward the paper surface near side. On the other hand, the secondary conductors 17f indicate that the secondary current flows from the paper surface near side toward the paper surface depth side. Note that, in FIG. 5, for convenience of explanation, an example including sixteen primary conductors 11 and sixteen secondary conductors 17 is illustrated.

When a primary current (an AC current) is supplied from the inverter 6 to the stator 8 in a direction indicated by the primary conductors 11a and the primary conductors 11b in FIG. 5, the stator 8 forms a rotating magnetic field. In the rotating magnetic field, in the example illustrated in FIG. 5, eight magnetic poles (N poles and S poles) (eight poles) are formed. When the rotating magnetic field rotates clockwise in FIG. 5 and crosses the secondary conductors 17, that is, a speed difference (a slip) occurs between the rotating magnetic field and the secondary conductors 17, a secondary current (an induction current) flows in a direction indicated by the secondary conductors 17e and the secondary conductors 17f in FIG. 5 according to the Fleming's right hand rule. According, eight magnetic poles (eight poles) as many as the magnetic poles of the rotating magnetic field of the stator 8 are formed in the cage unit 13 (the rotor 9).

When a secondary current flows to the secondary conductors 17, an electromagnetic force is generated in the secondary conductors 17 according to the Fleming's left hand rule. With the electromagnetic force of the secondary conductors 17 and the rotating magnetic field of the stator 8, the rotor 9 rotates clockwise with a delay with respect to the rotating magnetic field. Then, since the output shaft 14 connected to the rotor 9 also rotates, motor torque generated by the motor 2 is transmitted to the left and right front wheels FW via the speed reducer 3 and the left and right drive shafts 4. Accordingly, the left and right front wheels FW are driven by the motor torque generated in the motor 2.

In the cage unit 13, as illustrated in FIG. 5, eight parts P where a secondary current flowing in one secondary conductor 17e and a secondary current flowing in the other secondary conductor 17f flow in opposite direction are formed, the one secondary conductor 17e and the other secondary conductor 17f being adjacent to each other in the circumferential direction. Here, when the secondary conductors 17 adjacent to each other in the circumferential direction are disposed close to each other, there is a concern that a leakage current occurs in the parts P. However, in this embodiment, the first one end side portion 21a, the second one end side portion 22a, and the third one end side portion 23a and the first other end side portion 21b, the second other end side portion 22b, and the third other end side portion 23b are respectively separated in the circumferential direction and the first insulating film section 17c is provided. Therefore, the leakage current in the parts P is suppressed.

As explained above, in this embodiment, the one end portions 17a and the other end portions 17b of the secondary conductors 17 are respectively connected to the positions separated from one another in the circumferential direction in the single short-circuit ring 18. Therefore, the parts on the one end portion side of the secondary conductors 17 (the first one end side portion 21a, the second one end side portion 22a, and the third one end side portion 23a) and the parts on the other end portion side of the secondary conductors 17 (the first other end side portion 21b, the second other end side portion 22b, and the third other end side portion 23b) are separated in the circumferential direction. This makes it possible to suppress a leakage current that occurs between the parts on the one end side and the parts on the other end side. Therefore, even when the number of poles of the stator 8 is increased, it is possible to prevent a loss due to a leakage current from increasing. Therefore, it is possible to avoid shortage of a vehicle driving force at a vehicle travel start time or the like. By reducing one short-circuit ring compared with the induction motor of the related art, it is possible to reduce one route in which a secondary current leaks to the rotor core 12 and the like via the short-circuit ring. This makes it possible to prevent the secondary current from leaking to the rotor core 12 and the like via the short-circuit ring to be a loss. By reducing one short-circuit ring compared with the induction motor of the related art, it is possible to realize a reduction in the weight and a reduction in the cost of the rotor 9 (the motor 2).

The one end portion 17a and the other end portion 17b of the first secondary conductor 21 are respectively located on both the sides in the circumferential direction of the one end portion 17a of the second secondary conductor 22. That is, since first one end side portion 21a and the first other end side portion 21b of the first secondary conductor 21 are sufficiently separated in the circumferential direction, it is possible to securely prevent a leakage current from occurring between both the parts.

Since both the ends of the secondary conductors 17 formed in the U shape only have to be connected to the single short-circuit ring 18, for example, when the cage unit 13 is manufactured, it is possible to reduce manufacturing cost of the motor 2.

Since the first insulating film section 17c is provided on the outer surfaces of the secondary conductors 17, it is possible to more securely prevent a leakage current from occurring between the secondary conductors 17 or between the parts on the one end portion side in the secondary conductors 17 (for example, the first one end side portion 21a) and the parts on the other end side portion in the secondary conductors 17 (for example, the first other end side portion 21b).

Since the first insulating film section 17c is not provided in the connecting portion of the single short-circuit ring 18 in the secondary conductors 17, the secondary conductors 17 and the single short-circuit ring 18 become conductible. Accordingly, the secondary conductors 17 and the single short-circuit ring 18 can form a closed circuit capable of feeding a secondary current. Therefore, it is possible to prevent, with the first insulating film section 17c, a flow of a secondary current between the secondary conductors 17 and the single short-circuit ring 18 from being hindered.

Since the second insulating film section 18b is provided on the outer surface of the single short-circuit ring 18, it is possible to prevent rotor components (for example, the rotor core 12) other than the secondary conductors 17 and the single short-circuit ring 18 from conducting. This makes it possible to prevent a secondary current flowing in the secondary conductors 17 from leaking to the rotor components via the single short-circuit ring 18 to be a loss.

Since the one end portions 17a and the other end portions 17b of the secondary conductors 17 are bonded in the state in which the one end portions 17a and the other end portions 17b are inserted into the insertion holes 18a of the single short-circuit ring 18, it is possible to firmly connect the secondary conductors 17 and the single short-circuit ring 18.

### <Modifications>

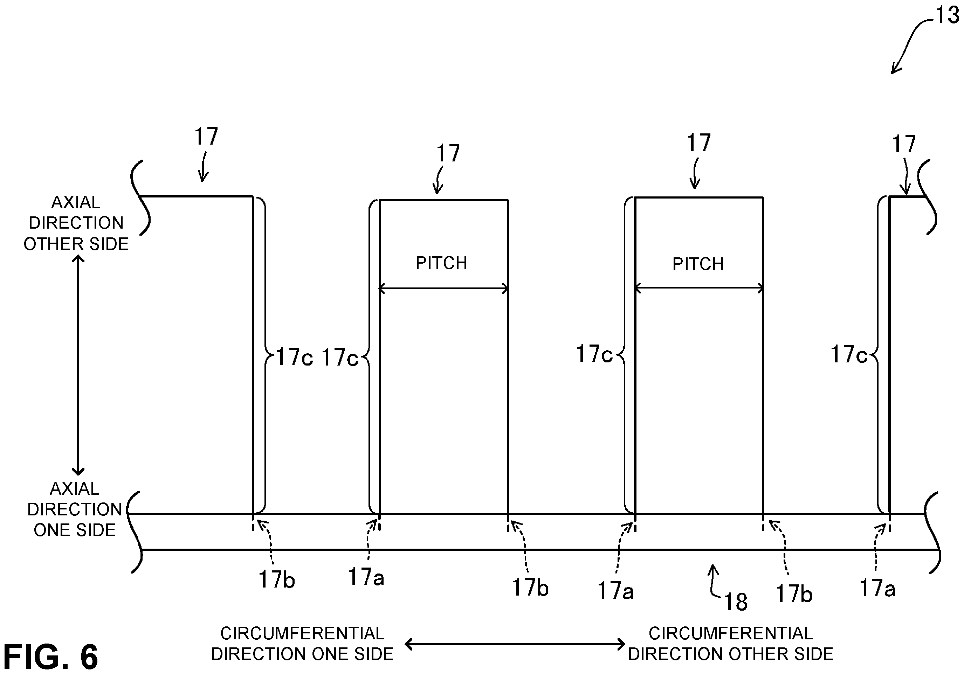

Note that, in this embodiment, the cage unit 13 includes the secondary conductor sets 20 configured by the plurality of secondary conductors 17. However, as illustrated in FIG. 6, the cage unit 13 may have a configuration in which single secondary conductors 17 are disposed side by side in the circumferential direction.

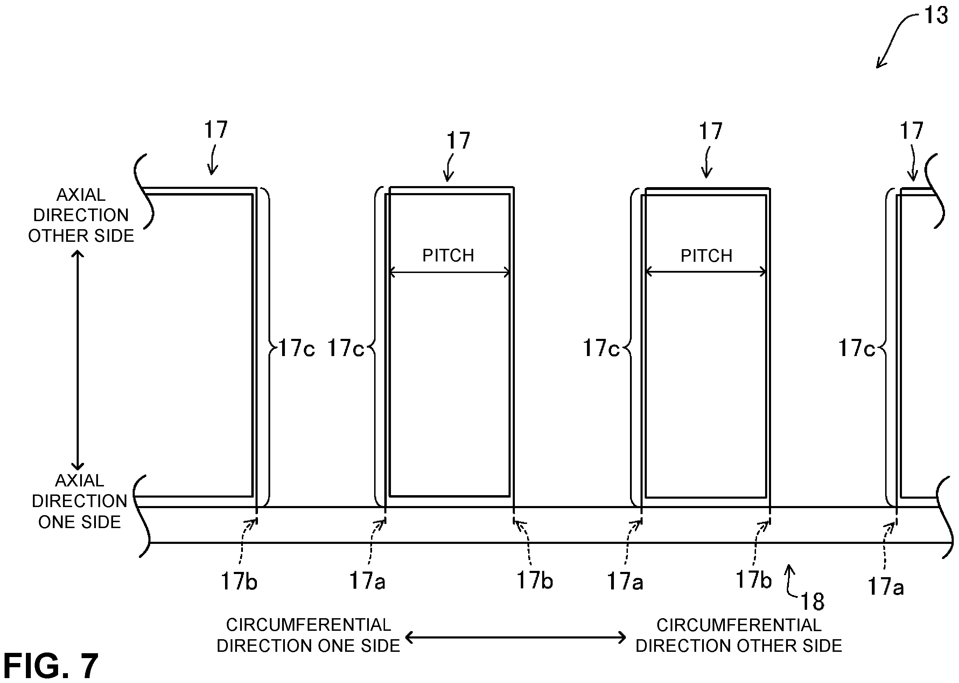

In this embodiment, the secondary conductors 17 are formed in the U shape. However, if both the end portions of the secondary conductors 17 are connected to the single short-circuit ring 18, the secondary conductors 17 may have a shape other than the U shape (a V shape or a multiple winding shape illustrated in FIG. 7).

In this embodiment, the example in which the secondary conductors 17 extend in the axial direction is explained. However, the secondary conductors 17 may be configured to incline to be further located on the circumferential direction one side or the circumferential direction other side as being further separated from the short-circuit ring 18, that is, further to the axial direction other side.

In this embodiment, the pitches in the circumferential direction among the first secondary conductor 21, the second secondary conductor 22, and the third secondary conductor 23 (the distances between the one end side portions 21a to 23a and the other end side portions 21b to 23b) are set substantially the same as the pitches among the magnetic poles of the rotating magnetic field formed by the primary conductors 11 of the stator 8. However, the pitches may be set larger or may be set smaller than the pitches among the magnetic poles in a range in which a leakage current can be suppressed.

In this embodiment, the first insulating film section 17c and the second insulating film section 18b are provided. However, one of the first insulating film section 17c and the second insulating film section 18b may be provided or both of the first insulating film section 17c and the second insulating film section 18b may not be provided.

In this embodiment, the example in which both the end portions (the one end portions 17a and the other end portions 17b) of the secondary conductors 17 are bonded (connected) to the single short-circuit ring 18 by welding is explained. However, both the end portions of the secondary conductors 17 may be bonded by mechanical bonding using rivets, bolts, or the like, chemical bonding for welding, or metallurgical bonding such as brazing. The secondary conductors 17 and the short-circuit ring 18 may be casted as an integral casting. The secondary conductors 17 and the short-circuit ring 18 may be connected by, in a state in which the secondary conductors 17 molded in advance are set in a die for casting the short-circuit ring 18, pouring melted metal into the die. Alternatively, the secondary conductors 17 and the short-circuit ring 18 may be connected by, in a state in which the short-circuit ring 18 molded in advance is set in a die for casting the secondary conductors 17, pouring melted metal into the die.

In this embodiment, the example in which the number of poles of the stator 8 is eight is explained. However, the number of poles of the stator 8 may be six, ten, twelve, fourteen, sixteen, or eighteen if the number of poles is larger than four in the related art. For example, the number of poles of the stator 8 is preferably larger than four and equal to or smaller than twelve.

In this embodiment, the example in which the motor 2 is the induction motor is explained. However, a permanent magnet may be provided on the inner circumference side of the cage unit 13 in the rotor 9.

In this embodiment, the example in which the motor 2 drives only the front wheels FW is explained. However, the motor 2 may drive the front wheels FW and the rear wheels RW or may drive only the rear wheels RW. Alternatively, a plurality of motors 2 that respectively drive the front wheels FW and the rear wheels RW may be provided.

In this embodiment, the example in which the motor 2 drives the front wheels FW is explained. However, the motor 2 may perform regenerative electricity generation using rotation energy of the front wheels FW when the vehicle 1 decelerates and charge the battery 5 with regenerative electric power of the regenerative electricity generation.

In this embodiment, the example of the electric automobile is explained as an example of the vehicle 1. However, the vehicle 1 only has to be an electric car and may be, for example, a hybrid automobile including the motor 2 and a not-illustrated engine.

In this embodiment, the example of the four-wheeled vehicle is explained as an example of the vehicle 1. However, the vehicle 1 may be a three-wheeled vehicle or a two-wheeled vehicle or may be an agricultural vehicle (a tractor or the like) if the vehicle 1 is capable of traveling on the land.

### [Industrial Applicability]

The present invention is suitable for a motor.

### [Reference Signs List]

- 1: vehicle
- 2: motor
- 8: stator
- 9: rotor
- 13: cage unit
- 17: secondary conductor
- 17a: one end portion
- 17b: other end portion
- 17c: first insulating film section
- 18: short-circuit ring
- 18a: insertion hole
- 18b: second insulating film section
- FW: front wheel (driving wheel)

## Claims

1. A motor (2) comprising:
a cylindrical stator (8); and
a cylindrical rotor (9) rotatably provided in the stator (8) coaxially with a center axis of the stator (8), the motor (2) driving driving wheels (FW) of a vehicle (1) with rotation of the rotor (9), **characterized in that**
the rotor (9) includes a cage unit (13) including a single short-circuit ring (18) formed in a ring shape and a plurality of secondary conductors (17), and
one end portions (17a) and other end portions (17b) of the secondary conductors (17) are respectively connected to positions separated in a circumferential direction in the single short-circuit ring (18).

2. The motor (2) according to claim 1, **characterized in that**
the plurality of secondary conductors (17) include a first secondary conductor (21) and a second secondary conductor (22), and
one end portion (17a) of the second secondary conductor (22) is located between one end portion (17a) and another end portion (17b) of the first secondary conductor (21) in the circumferential direction.

3. The motor (2) according to claim 1 or 2, **characterized in that** the plurality of secondary conductors are formed in a U shape.

4. The motor (2) according to claim 3, **characterized in that** the U shape is formed by an one end side portion (21a), an other side end portion (21b) extending in the axial direction and a connecting portion (21c, 22c, 23c) extending in the circumferential direction with its end portions being connected to the axial direction other side end portions of the one end side portion (21a, 22a, 22c) and the axial direction end portion of the other side end portion (21b, 22b, 23b).

5. The motor (2) according to any one of the preceding claims, **characterized in that** the rotor (9) includes a rotor core (12) with a plurality of housing recesses (12a) for housing the secondary conductors (17) and being disposed side by side in the circumferential direction while being spaced apart with a predetermined distance from one another, wherein the depths of the plurality of housing recesses (12a) are set to three stages of large, middle, and small.

6. The motor (2) according to any one of the preceding claims, **characterized in that** pitches in the circumferential direction between one end side portions (21a, 22a, 23a) and other end side portions (21b, 22b, 23b) of the secondary conductors are set the same, preferably the pitches are set the same as pitches among magnetic poles of a rotating magnetic field formed by first conductors (11) of the stator (8).

7. The motor according to any one of the preceding claims, **characterized in that** a first insulating film section (17c) including an insulative film is provided on outer surfaces of the plurality of secondary conductors (17) .

8. The motor (2) according to claim 7, **characterized in that** the first insulating film section (17c) is not provided in connecting portions (17a, 17b) to the single short-circuit ring (18) in the plurality of secondary conductors (17).

9. The motor (2) according to any one of the preceding claims, **characterized in that** a second insulating film section (18b) including an insulative film is provided on an outer surface of the single short-circuit ring (18).

10. The motor (2) according to any one of the preceding claims, **characterized in that**
a plurality of insertion holes (18a) are provided in the circumferential direction in the single short-circuit ring (18), and
the one end portions (17a) and the other end portions (17b) of the secondary conductors (17) are bonded to the single short-circuit ring in a state in which the one end portions (17a) and the other end portions (17b) are inserted into the plurality of insertion holes (18a).

11. The motor (2) according to any one of the preceding claims, **characterized in that** a cylindrical cover (19) is wound on the outer circumference of the rotor core (12), in particular on the outer circumference of the plurality of secondary conductors (17), to prevent the secondary conductors (17) from being deformed toward the outer circumference side.

12. The motor (2) according to any one of the preceding claims, **characterized in that** the number of poles of the rotor (9) and the number of poles of the stator (8) coincide.

13. A vehicle (1) including at least one driving wheel (FW) being driven by rotation of the rotor (9) of a motor (2) according to anyone of claims 1 to 12.
